# EUROPEAN PATENT SPECIFICATION

(11) **EP 4 493 391 B1**
(45) Date of publication and mention of the grant of the patent: **31.12.2025**
(21) Application number: 23712071.2
(22) Date of filing: 09.03.2023
(51) Int. Cl.: B29C 64/106, B29C 70/66, B33Y 70/00, B33Y 80/00, C08J 9/32, B29K 105/00, B29K 105/04, B29K 105/16

(54) **SYNTACTIC FOAMS**
SYNTAKTISCH SCHAUM
MOUSSE SYNTACTIQUE

(30) Priority: 17.03.2022 GB 202203694
(43) Date of publication of application: 22.01.2025
(73) Proprietor: BAE SYSTEMS plc, London SW1Y 5AD (GB)
(72) Inventor: ALLPRESS, Megan Elizabeth, Barrow-in-Furness Cumbria LA14 1AF (GB); LEIGHTON, Sean James, Barrow-in=Furness Cumbria LA14 1AF (GB)
(74) Representative: BAE SYSTEMS plc Group IP Department
(86) International application number: PCT/GB2023/050558
(87) International publication number: WO 2023/175305

(56) References cited:
- WO-A1-2019/006029
- WO-A1-2020/028232
- WO-A1-2020/118264
- US-A1- 2021 047 490
- WU XINFENG ET AL: "Recent developments on epoxy-based syntactic foams for deep sea exploration", JOURNAL OF MATERIAL SCIENCE, KLUWER ACADEMIC PUBLISHERS, DORDRECHT, vol. 56, no. 3, 12 October 2020 (2020-10-12), pages 2037 - 2076, XP037284647, ISSN: 0022-2461, [retrieved on 20201012], DOI: 10.1007/S10853-020-05420-W

## Description

### FIELD

The present invention relates to the deposition of syntactic foams, more particularly to the formation of floatation devices for a vessel via layer wise selective deposition of syntactic foam.

### BACKGROUND

Syntactic foams are used as floatation devices for a body, such as ships, boats, maritime engineering platforms. The foams are typically filled into containers, which containers are then affixed to the body. Alternatively, syntactic foams are prepared in bulk and cut to shape, which are then affixed to the body.

US2021/047490 is directed to depositable solvent based inks to provide a low density polymer. WO 2020/118264 is directed to forming foams using spray coated particles which are melted into a final material by an additive layer process.

### SUMMARY

According to an aspect of the present invention, there is provided a method of selectively depositing a syntactic foam, to provide a buoyancy device on a substrate, comprising the steps of:
i) selecting a low density polymer with a density in the range of from 0.8 to 1.2 g/cm³,
ii) forming an admixture of a pre-polymer 50-95%vol that will form the said low density polymer, and hollow microspheres in the range of from 5-50%vol;
iii) selectively depositing the admixture via a nozzle to form a layer, causing solidification of the polymer,
iv) repeating step iii) to form the device on the substrate wherein the syntactic foam has a density in the range of from 0.3 to 0.9g/cm^{3,} wherein the polymer is a low density thermoplastic polymer, comprising the steps of forming an admixture comprising a melt of the low density thermoplastic polymer.

The admixture of a pre-polymer is a curable monomer thermoplastic polymer.

There is further provided a method, not according to the claims, of selectively depositing a syntactic foam, to provide a buoyancy device on a substrate, comprising the steps of:
i) selecting a low density polymer with a density in the range of from 0.8 to 1.2 g/cm³,
ii) forming an admixture of a monomer 50-95%vol that will form the said low density polymer, and hollow microspheres in the range of from 5-50%vol;
iii) selectively depositing the admixture via a nozzle to form layer, causing the cure of the admixture,
iv) repeating step iii) to form the buoyancy device on the substrate, wherein the syntactic foam has a density in the range of 0.3 to 0.9g/cm³.

According to the invention there is provided a method of selectively depositing a syntactic foam, to provide a buoyancy device on a substrate, comprising the steps of
i) selecting a low density thermoplastic polymer with a density in the range of from 0.8 to 1.2 g/cm³,
ii) forming an admixture comprising a melt of the low density thermoplastic polymer 50-95%vol, and hollow microspheres in the range of 5-50%vol range;
iii) selectively depositing the admixture via a nozzle to form a layer, causing the layer to solidify (where the layer then solidifies).
v) repeating step iii) to form the buoyancy device on the substrate, wherein the syntactic foam has a density in the range of 0.3 to 0.9g/cm³.

The step of causing the melt of the thermoplastic polymer, may be achieved by a heater, such as an electric heater, laser or water jacket, depending on the melting temperature of the selected thermoplastic polymer. The step of causing the cooling, may reduce to the temperature of the layer, such that it forms a solid layer capable of forming a support for the subsequent layer to be deposited thereon.

The rate of solidification must be sufficiently quick such that after a first layer of material has been deposed, that the layer is solid such as to allow the next layer to be formed.

The step of selective deposition may include the step of selectively depositing the admixture to produce regions or absences of polymer, which may contain no syntactic foam, thereby causing a decrease in the density of the syntactic foam device.

The syntactic foam has a density in the range of from 0.3 g/cm³ - 0.9 g/cm³, as low as possible while maintaining strength.

The thermoplastics polymer may be selected from, Polyamide PA, polypropylene PP, high and low density polyethylene HDPE, LDPE, polyetherimide PEI, and polystyrenes. Preferably with densities as low as possible while maintaining strength.

The hollow microspheres are present in the range of from 5vol% to 50vol%, more preferably in the range of from 40-50vol%.

The hollow microspheres may have an average diameter in the range of from 5 microns to 300 microns, to allow passage through the 3D printer nozzle.

The hollow microspheres may be made from any suitable materials, such as example glass, ceramic, polymer or metal spheres. The microspheres may be of fixed volume, or may be gas filled expanding microspheres, such that with the application of a thermal stimulus the microspheres expand to a larger volume, with a concomitant decrease in the density of the syntactic foam. Microspheres is a well-known term, and the shapes are generally spheroid, for example a sphere, an ovoid, a cylinder a prism, a polyhedron, a cone, a parallelepiped, a cube, a cuboid form, a pyramid, and prism and other oblate spheroid shapes are common. Preferably spheroid.

The microspheres may be uniformly distributed within the admixture, such that the syntactic foam device has uniform density across the device. Alternatively the microspheres may be provided at different volumes of inclusion within a layer such that the syntactic foam device has different regions of density therein. The density of the syntactic foam device may also be controlled by the selective non-deposition of the admixture, as defined hereinbefore.

The micro-elements may, for example, be dosed via a dosimetric pump

The syntactic foam device, may require regions of structural support, or reinforced areas, for example where the syntactic foam device may be secured to an element or body. The reinforcement may be the absence of the hollow spheres, such that there may be deposited regions containing only low density polymer. Alternatively reinforcement fillers, fibre plys, splines, may be introduced to the layers. The use of fillers, such as chopped fibres, particulate powders may be added to the admixture and selectively deposited where needed.

According to a further aspect of the invention there is provided a syntactic foam floatation apparatus, comprising
a low density thermoplastic polymer 50-95vol% with a density in the range of from 0.8 to 1.2g/cm³, and hollow spheres in the range of 5-50%vol range;
characterised in that said flotation apparatus comprising a plurality of cavities with a void volume at least 10vol% that contain no syntactic foam, wherein the syntactic foam has a density in the range of from 0.3 to 0.9g/cm³.

According to a further aspect of the invention there is provided a vehicle vessel or craft comprising a layerwise deposited syntactic foam, said foam comprising:
a low density thermoplastic polymer 50-95vol% with a density in the range of from 0.8 to 1.2g/cm³, and hollow spheres in the range of 5-50%vol range;
wherein the syntactic foam has a density in the range of from 0.3 to 0.9g/cm³.

The admixture, may be directly applied to any substrate or device by means of either extrusion, deposition or spray process, e.g. via a nozzle printing. The substrate may be the 3D printer print bed, a vehicle, vessel or craft, such as a boat or ship. Additionally, in the domain of underwater equipment, such as offshore oil and gas production, flexible pipe and umbilicals require the use of buoyancy.

The substrate may be the printbed of the 3D printer, in-situ in a vessel, or any suitable surface. The syntactic foam may be deposited on a printbed forming the shape, removed from the 3D printing machine and then placed on the vessel.

Typically, floatation devices are prepared by casting large volumes of syntactic foam material which are then cut into panels in order to fit within a dedicated compartment. Alternatively, the floatation device is prepared within an outer container, to provide containment of the syntactic foam The selective deposition of the admixture allows the final shape to be built up for use on the vessel, without need for providing a container to house the syntactic foam, or for providing panels that require modification and cutting. Thereby reducing the processing time and material wastage.

Alternatively, the direct application of the admixture to a region of a boat or ship allows the floatation device to be directly built up on the structural member within the boat or ship.

The admixture may be applied and built up as a succession of layers, to provide the syntactic foam device. The successive layers may have different composition of admixture ie different percentage inclusion of microspheres.

Some examples relate to a process for making a syntactic foam including the steps below:
In one arrangement the admixture may be degassed.

Some are thermosetting plastics in which the term "resin" can be applied to the reactant or product, or both. "Resin" may be applied to one of two monomers in a copolymer (the other being called a "hardener", as in epoxy resins). In case of epoxy resin, It may be chosen in the group including epoxy bisphenol A diglycidyl ether based resin, Bisphenol F epoxy resin, Novolac epoxy resin as epoxy phenol novolacs (EPN) and epoxy cresol novolacs (ECN), Aliphatic epoxy resin as glycidyl epoxy resins and cycloaliphatic epoxides, e.g. dodecanol glycidyl ether, diglycidyl ester of hexahydrophthalic acid or trimethylolpropane triglycidyl ether, Glycidylamine epoxy resin and methyl methacrylate resin.

Some are polyurethane resins which consist of a polymer composed of a chain of organic units joined by carbamate (urethane) links. They can be thermosetting polymers, not according to the claims, that do not melt when heated, or thermoplastic polyurethane resins.

Polymerisation initiators allow the setting or the beginning of the setting reaction of the curable liquid resin monomer or prepolymer. The polymerisation initiator may be selected depending on the kind of the curable liquid resin monomer. It can be selected in the group including polyfunctional amines, acids, acid anhydrides, phenols, alcohols, thiols, and polyols. For example, when the curable liquid resin monomer or prepolymer is polyurethane, the polymerization initiator may be polyol. When the liquid resin monomer or prepolymer is epoxy, the polymerization initiator may be a hardener; for example a polyfunctional amine, an acid, a phenol, an alcohol, or a thiol.

Mixing may be carried out at a temperature determined in order to obtain a suitable viscosity, i.e. a viscosity allowing mixing, and to control polymerisation. Advantageously, for thermoset polymers, the temperature is determined in order to limit and control the exothermic output of the curing step. For thermoset polymers the temperature is determined depending on the nature of the operable curable liquid resin, and possibly on the kind of the micro-elements. For thermoplastic polymers the temperature is determined by the melt temperature.

The formation of the admixture may be carried out by applying a mechanical force on the mixture including or consisting of operable curable liquid monomer/ melt of thermoplastic and microspheres. The force may be selected from a shear force and a homogenization force resulting in less than about 15% of degradation or breakage of the microspheres. The means of applying the mechanical force may be any mean known by one of ordinary skill in the art.

### BRIEF DESCRIPTION OF THE FIGURES

Embodiments of the invention will now be described by way of example only with reference to the figures, in which:
Figure 1 shows a deposition system with a mixing nozzle...;
Figure 2 shows a deposition with pre-mixed reservoir
Figure 3 shows a curved substrate with deposited syntactic foam ...; and
Figure 4 shows a substrate with deposited syntactic foam and regions of no foam.

### DETAILED DESCRIPTION

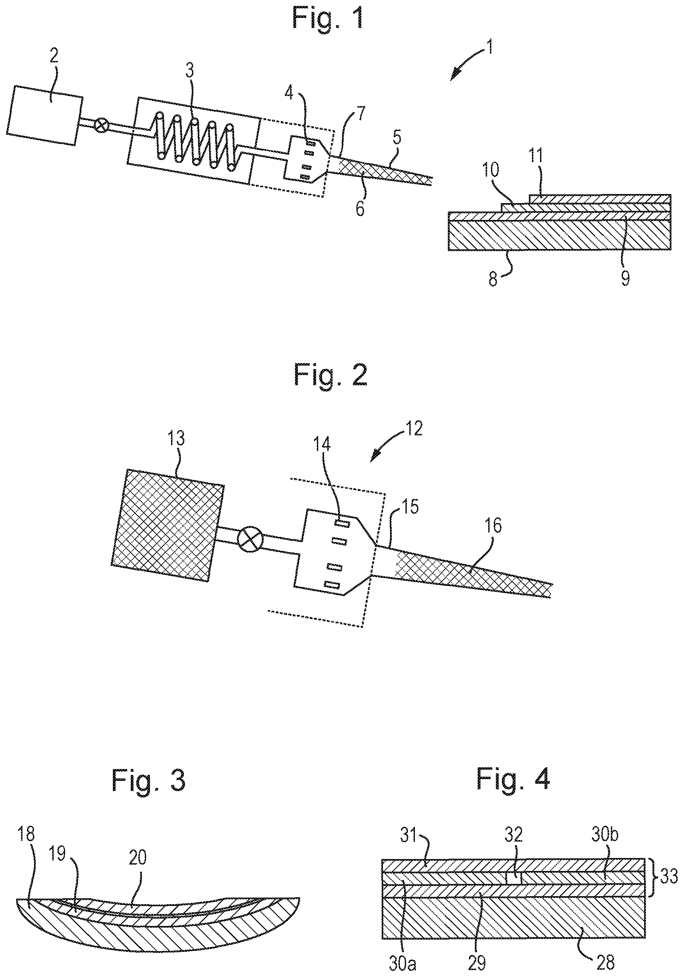

Turning to fig 1, shows a deposition system 1, which comprises a reservoir 2 of a molten thermoplastic, the mixing chamber 3 provides an admixture with the monomer and microspheres 5, the admixture passes through a head 4, and a nozzle 7. The curing monomer/cooling thermoplastic 6 and microspheres are deposited layerwise 9-11, onto a substrate 8. The first layer 9 of the deposited material is deposited onto the substrate 8, and once cured and/or solid a second layer 10, and further layers to be built up. The layer wise deposition allows a floatation device to be built-up layer wise, such that the need to cut panels to size or to affix containers filled with a syntactic foam is removed.

Turning to fig 2, shows a deposition system 12, which comprises a reservoir 13 of an admixture of molten thermoplastic and microspheres, the admixture passes through a head 14, and a nozzle 15. The curing monomer/cooling thermoplastic 16 and microspheres are deposited layer wise onto a substrate as previously described.

Turning to fig 3, there is provided a curved substrate 18, which may be the hull of a ship or boat. The layerwise addition of first layer 19 and second layer 20 of syntactic foam allows for the contours of the hull to be adapted to, without complex cutting and affixing of panels of syntactic foam.

Turning to fig 4, there is provided a substrate 28, which may be the 3D printer print bed, the hull of a ship or boat. The layerwise addition of first layer 29, is followed by a second layer 30a, then a region of no syntactic foam 32, which is a void or cavity, and then the second layer continues 30b, to form a support for the third layer 31. The cavity 32, further reduces the density of the final syntactic foam structure 33.

## Claims

1. A method of selectively depositing a syntactic foam, to provide a buoyancy device on a substrate, comprising the steps of:
i) selecting a low density polymer with a density in the range of from 0.8 to 1.2 g/cm³,
ii) forming an admixture of a pre-polymer 50-95%vol that will form the said low density polymer, and hollow microspheres in the range of from 5-50%vol;
iii) selectively depositing the admixture via a nozzle to form a layer, causing solidification of the polymer,
iv) repeating step iii) to form the device on the substrate wherein the syntactic foam has a density in the range of from 0.3 to 0.9g/cm³,
**characterized in that**
the polymer is a low density thermoplastic polymer, comprising
the steps of forming an admixture comprising a melt of the low density thermoplastic polymer.

2. A method of according to claim 1, wherein the admixture is a curable monomer.

3. A method according to any one of the preceding claims wherein the step of selective deposition includes the step of selectively depositing the admixture to produce cavities containing no syntactic foam to decrease the density of the syntactic foam part.

4. A method according to any one of the preceding claims , wherein the low density polymer is selected from thermoplastics, PA, PP, HDPE, LDPE, PEI.

5. A method according to any one of the preceding claims, wherein the hollow microspheres are present in the range of from 40vol% to 50vol%.

6. A method according to any one of the preceding claims, wherein the hollow microspheres have an average diameter in the range of 5 to 300 microns.

7. A method according to anyone of the preceding claims, wherein the hollow microspheres are glass, ceramic, polymer or metal spheres.

8. A method according to claim 7, wherein the microspheres are gas filled expanding microspheres.

9. A method according to any one of the preceding claims, wherein there are deposited regions of reinforcement material containing only low density polymer

10. A method according to any one of the preceding claims, wherein the syntactic foam is applied to a region of a boat or ship, such as to allow the floatation device to be directly built up on a structural member within the boat or ship.

11. A syntactic foam floatation apparatus, comprising
a low density thermoplastic polymer 50-95vol% with a density in the range of from 0.8 to 1.2g/cm³, and hollow spheres in the range of 5-50%vol range;
**characterised in that** said flotation apparatus comprising a plurality of cavities with a void volume at least 10vol% that contain no syntactic foam, wherein the syntactic foam has a density in the range of from 0.3 to 0.9g/cm³.

12. A boat or ship comprising a layerwise deposited syntactic foam, directly built up on a structural member, said foam comprising:
a low density thermoplastic polymer 50-95vol% with a density in the range of from 0.8 to 1.2g/cm³, and hollow spheres in the range of 5-50%vol range;
wherein the syntactic foam has a density in the range of from 0.3 to 0.9g/cm³.

13. A boat or ship according to claim 12, wherein the low density polymer is selected from thermoplastics, PA, PP, HDPE, LDPE, PEI.

## Patentansprüche

1. Verfahren zum selektiven Aufbringen eines syntaktischen Schaums zum Bereitstellen eines Auftriebskörpers auf einem Substrat, umfassend die Schritte:
i) Auswählen eines Polymers niedriger Dichte mit einer Dichte im Bereich von 0,8 bis 1,2 g/cm³,
ii) Bilden einer Mischung aus einem Präpolymer mit 50 bis 95 Vol.-%, das das Polymer niedriger Dichte bilden wird, und Hohlmikrokugeln im Bereich von 5 bis 50 Vol.-%;
iii) selektives Aufbringen der Mischung über eine Düse derart, dass eine Schicht gebildet, wodurch eine Verfestigung des Polymers bewirkt wird,
iv) Wiederholen von Schritt iii) derart, dass der Körper auf dem Substrat gebildet wird, wobei der syntaktische Schaum eine Dichte im Bereich von 0,3 bis 0,9 g/cm³ aufweist,
**dadurch gekennzeichnet, dass**
das Polymer ein thermoplastisches Polymer niedriger Dichte ist, umfassend die Schritte des Bildens einer Mischung, die eine Schmelze des thermoplastischen Polymers niedriger Dichte umfasst.

2. Verfahren nach Anspruch 1, wobei es sich bei der Mischung um ein härtbares Monomer handelt.

3. Verfahren nach einem der vorstehenden Ansprüche, wobei der Schritt des selektiven Aufbringens den Schritt des selektiven Aufbringens der Mischung derart, dass Hohlräume erzeugt werden, die keinen syntaktischen Schaum enthalten, einschließt, um die Dichte des syntaktischen Schaumteils zu verringern.

4. Verfahren nach einem der vorstehenden Ansprüche, wobei das Polymer niedriger Dichte aus Thermoplasten, PA, PP, HDPE, LDPE, PEI, ausgewählt ist.

5. Verfahren nach einem der vorstehenden Ansprüche, wobei die Hohlmikrokugeln im Bereich von 40 Vol.-% bis 50 Vol.-% vorliegen.

6. Verfahren nach einem der vorstehenden Ansprüche, wobei die Hohlmikrokugeln einen mittleren Durchmesser im Bereich von 5 bis 300 Mikrometern aufweisen.

7. Verfahren nach einem der vorstehenden Ansprüche, wobei es sich bei den Hohlmikrokugeln um Glas-, Keramik-, Polymer- oder Metallkugeln handelt.

8. Verfahren nach Anspruch 7, wobei es sich bei den Mikrokugeln um gasgefüllte expandierende Mikrokugeln handelt.

9. Verfahren nach einem der vorstehenden Ansprüche, wobei aufgebrachte Regionen aus Verstärkungsmaterial vorliegen, die nur Polymere niedriger Dichte enthalten.

10. Verfahren nach einem der vorstehenden Ansprüche, wobei der syntaktische Schaum in einer Region eines Bootes oder Schiffes derart aufgebracht wird, dass der Schwimmkörper direkt auf einem Konstruktionselement innerhalb des Bootes oder Schiffes aufgebaut wird.

11. Schwimmeinrichtung aus syntaktischem Schaum, umfassend
ein thermoplastisches Polymer niedriger Dichte mit 50 bis 95 Vol.-% und mit einer Dichte im Bereich von 0,8 bis 1,2 g/cm³ und Hohlkugeln im Bereich von 5 bis 50 Vol.-%;
**dadurch gekennzeichnet, dass** die Schwimmeinrichtung eine Vielzahl von Hohlräumen mit einem Hohlraumvolumen von mindestens 10 Vol.-, die keinen syntaktischen Schaum enthalten, umfasst, wobei der syntaktische Schaum eine Dichte im Bereich von 0,3 bis 0,9 g/cm³ aufweist.

12. Boot oder Schiff, das einen schichtweise aufgebrachten syntaktischen Schaum umfasst, der direkt auf einem Konstruktionselement aufgebaut ist, wobei der Schaum umfasst:
ein thermoplastisches Polymer niedriger Dichte mit 50 bis 95 Vol.-% und mit einer Dichte im Bereich von 0,8 bis 1,2 g/cm³ und Hohlkugeln im Bereich von 5 bis 50 Vol.-%;
wobei der syntaktische Schaum eine Dichte im Bereich von 0,3 bis 0,9 g/cm³ aufweist.

13. Boot oder Schiff nach Anspruch 12, wobei das Polymer niedriger Dichte aus Thermoplasten, PA, PP, HDPE, LDPE, PEI, ausgewählt ist.

## Revendications

1. Procédé de dépôt sélectif d'une mousse syntactique, permettant de former un dispositif de flottaison sur un substrat, comprenant les étapes consistant à :
i) sélectionner un polymère basse densité ayant une masse volumique dans la plage de 0,8 à 1,2 g/cm³,
ii) former un mélange d'un pré-polymère à 50 à 95 % en volume qui formera ledit polymère basse densité, et de microsphères creuses dans la plage de de 5 à 50 % en volume ;
iii) déposer sélectivement le mélange par l'intermédiaire d'une buse pour former une couche, entraînant la solidification du polymère,
iv) répéter l'étape iii) pour former le dispositif sur le substrat, dans lequel la mousse syntactique a une masse volumique dans la plage de 0,3 à 0,9 g/cm³,
**caractérisé en ce que**
le polymère est un polymère thermoplastique basse densité, comprenant les étapes de formation d'un mélange comprenant une masse fondue du polymère thermoplastique basse densité.

2. Procédé selon la revendication 1, dans lequel le mélange est un monomère durcissable.

3. Procédé selon l'une quelconque des revendications précédentes, dans lequel l'étape de dépôt sélectif comporte l'étape de dépôt sélectif du mélange pour produire des cavités ne contenant pas de mousse syntactique afin de diminuer la masse volumique de la partie en mousse syntactique.

4. Procédé selon l'une quelconque des revendications précédentes, dans lequel le polymère basse densité est choisi parmi les thermoplastiques, le PA, le PP, le PEHD, le PEBD, le PEI.

5. Procédé selon l'une quelconque des revendications précédentes, dans lequel les microsphères creuses sont présentes dans la plage de 40 % en volume à 50 % en volume.

6. Procédé selon l'une quelconque des revendications précédentes, dans lequel les microsphères creuses ont un diamètre moyen dans la plage de 5 à 300 micromètres.

7. Procédé selon l'une quelconque des revendications précédentes, dans lequel les microsphères creuses sont des sphères de verre, de céramique, de polymère ou de métal.

8. Procédé selon la revendication 7, dans lequel les microsphères sont des microsphères expansibles remplies de gaz.

9. Procédé selon l'une quelconque des revendications précédentes, dans lequel sont déposées des régions de matériau de renforcement ne contenant que le polymère basse densité

10. Procédé selon l'une quelconque des revendications précédentes, dans lequel la mousse syntactique est appliquée à une région d'un bateau ou d'un navire, de manière à permettre au dispositif de flottaison d'être directement construit sur un élément structurel à l'intérieur du bateau ou du navire.

11. Appareil de flottaison en mousse syntactique, comprenant
un polymère thermoplastique basse densité à 50 à 95 % en volume avec une masse volumique dans la plage de 0,8 à 1,2 g/cm³, et des sphères creuses dans la plage de 5 à 50 % en volume ;
**caractérisé en ce que** ledit appareil de flottation comprend une pluralité de cavités avec un volume de vide d'au moins 10 % en volume qui ne contiennent pas de mousse syntactique, dans lequel la mousse syntactique a une masse volumique dans la plage de 0,3 à 0,9 g/cm³.

12. Bateau ou navire comprenant une mousse syntactique déposée couche par couche, directement construite sur un élément structurel, ladite mousse comprenant :
un polymère thermoplastique basse densité à 50 à 95 % en volume avec une masse volumique dans la plage de 0,8 à 1,2 g/cm³, et des sphères creuses dans la plage de 5 à 50 % en volume ;
dans lequel la mousse syntactique a une masse volumique dans la plage de 0,3 et 0,9 g/cm³.

13. Bateau ou navire selon la revendication 12, dans lequel le polymère basse densité est choisi parmi les thermoplastiques, le PA, le PP, le PEHD, le PEBD, le PEI.
